# EUROPÄISCHE PATENTSCHRIFT

(11) **EP 3 616 645 B1**
(45) Veröffentlichungstag und Bekanntmachung des Hinweises auf die Patenterteilung: **04.08.2021**
(21) Anmeldenummer: 18191423.5
(22) Anmeldetag: 29.08.2018
(51) Int. Cl.: A61C 1/18, A61B 17/00

(54) **DENTALES CHIRURGIEHANDSTÜCK ZUR ÜBERTRAGUNG HOHER DREHMOMENTE AUF EIN WERKZEUG**
DENTAL SURGERY HAND PIECE FOR THE TRANSMISSION OF HIGH TORQUES TO A TOOL
PIÈCE À MAIN CHIRURGICALE DENTAIRE PERMETTANT DE TRANSMETTRE UN COUPLE DE ROTATION ÉLEVÉ À UN OUTIL

(43) Veröffentlichungstag der Anmeldung: 04.03.2020
(73) Patentinhaber: KaVo Dental GmbH, 88400 Biberach (DE)
(72) Erfinder: Claßen, Thomas, 88518 Herbertingen (DE)
(74) Vertreter: Thun, Clemens

(56) Entgegenhaltungen:
- WO-A1-2018/060343
- JP-A- S5 345 096
- US-A1- 2003 207 233

## Beschreibung

Die vorliegende Erfindung betrifft ein dentales Chirurgiehandstück zur Übertragung hoher Drehmomente auf ein Werkzeug.

Aus dem Stand der Technik sind dentale Chirurgiehandstücke bekannt. Allerdings hat die Praxis gezeigt, dass sich bei Verwendung von Werkzeugen, deren Schäfte der aktuell gültigen Norm DIN ISO 1797 entsprechen, hohe Drehmomente - wie sie zum Teil gewünscht sind - nur bedingt geeignet übertragen lassen. Es besteht nämlich die Gefahr, dass hierbei Deformationen und Aufwerfungen entstehen, insbesondere, wenn ein Werkzeug verwendet wird, dessen Schaft nicht gehärtet ist. In der Folge können beispielsweise Probleme beim Einsetzen und/oder beim Entnehmen des Werkzeugs aus dem betreffenden dentalen Chirurgiehandstück auftreten.

Entsprechend hohe Drehmomente können beispielsweise bei chirurgischen Anwendungen wie dem Setzen oder Entfernen von Zahnimplantaten, oder bei einer Bearbeitung von Kieferknochen erwünscht sein.

Um diesem Problem zu begegnen, ist es bekannt, formschlüssige Verbindungen und Geometrien zwischen Werkzeug einerseits und Handstück andererseits zu verwenden; hierdurch lassen sich grundsätzlich höhere Drehmomente ohne Beeinflussung der Geometrie des betreffenden Werkzeugschaftes übertragen.

Ein zahnärztliches Handstück mit einer derartigen formschlüssigen Verbindung ist beispielsweise aus der WO 2018/060343 A1 bekannt. Weiterhin zeigen die JP S53 45096 A sowie die US 2003/207233 A1 zahnärztliche Handstücke zum Betreiben drehbar gelagerter Werkzeuge, wobei in diesen Fällen allerdings keine von einer Rotationssymmetrie abweichenden Geometrien vorgesehen sind.

Allerdings haben Dauerbelastungsversuche im Fall von Handstücken mit einem hexagonal geformten Werkzeugaufnahmebereich gezeigt, dass, aufgrund einer hohen wechselseitigen Drehmomentbelastung bis zu 80 Ncm, Beschädigungen auftreten können. Bei diesen Beschädigungen kann es sich beispielsweise um Brüche im Bereich von Verzahnungsteilen handeln oder gar um Ausbrüche im Bereich einer Sechskantgeometrie. So besteht insbesondere die Gefahr, dass ein weggebrochenes Teil von einem Patienten verschluckt wird.

Der Erfindung liegt die Aufgabe zugrunde, ein verbessertes Chirurgiehandstück anzugeben. Insbesondere soll das Chirurgiehandstück verbesserte SicherheitsEigenschaften aufweisen.

Diese Aufgabe wird gemäß der Erfindung mit dem in dem unabhängigen Anspruch genannten Gegenstand gelöst. Besondere Ausführungsarten der Erfindung sind in den abhängigen Ansprüchen angegeben.

Gemäß der Erfindung ist ein dentales Chirurgiehandstück zur Übertragung hoher Drehmomente auf ein Werkzeug vorgesehen, das eine Griffhülse mit einer darin drehbar gelagerten Antriebswelle aufweist, einen Kopfbereich am vorderen Ende der Griffhülse, eine Antriebshülse zur Aufnahme des Werkzeugs, wobei die Antriebshülse über ein Kugellager um eine Drehachse drehbar in dem Kopfbereich gelagert angeordnet ist, sowie eine Getriebeanordnung zur Übertragung eines Drehmoments von der in der Griffhülse angeordneten Antriebswelle auf die in dem Kopfbereich angeordnete Antriebshülse. Dabei weist das Kugellager einen Innenring, Wälzkörper und einen Außenring auf, wobei die Wälzkörper in einer, normal zur Drehachse orientierten Ebene E angeordnet sind. Die Antriebshülse weist einen, sich über die Ebene E hinaus erstreckenden Endbereich mit einem nicht-kreiszylindrischen Innenwandbereich zur Übertragung des Drehmoments auf das Werkzeug auf, wobei sich der Endbereich über ein Gehäuse des Kopfbereichs hinaus erstreckt. Der Innenring des Kugellagers erstreckt sich um eine Mantelfläche des Endbereichs der Antriebshülse herum, im Wesentlichen ebenso weit wie der Endbereich der Antriebshülse (2) und bildet dabei eine Verstärkung des Endbereichs der Antriebshülse.

Durch die so gebildete Verstärkung des Endbereichs der Antriebshülse lässt sich erzielen, dass im Fall einer Übertragung eines hohen Drehmoments auf ein in der Antriebshülse eingespanntes Werkzeug die Gefahr einer Beschädigung verhindert oder zumindest verringert ist.

Vorzugsweise ist der Innenring des Kugellagers aus einem Stück bestehend beziehungsweise einteilig gestaltet. Durch diese einteilige Gestaltung lässt sich insbesondere erzielen, dass für die Verstärkung kein gesondertes Bauteil erforderlich ist. Dies ist insbesondere vorteilhaft mit Bezug auf den Herstellungsaufwand.

Vorzugsweise ist der Innenwandbereich der Antriebshülse polygonal, insbesondere hexagonal strukturiert. Dies ist vorteilhaft mit Bezug auf eine effektive Drehmomentübertragung von der Antriebshülse auf ein darin eingespanntes Werkzeug.

Vorzugsweise erstreckt sich - entlang der Drehachse betrachtet - der Endbereich der Antriebshülse um ein Maß d über die Ebene E - in der die Wälzkörper des Kugellagers angeordnet sind - hinaus, wobei sich der Innenring um ein weiteres Maß über die Ebene hinaus erstreckt, das mindestens 90% des zuerst genannten Maßes d beträgt, vorzugsweise mindestens 95%. So umgibt der Innenring einen entsprechend großen Anteil des Endbereichs der Antriebshülse; dies ist vorteilhaft mit Bezug auf die Verstärkungseigenschaft.

Vorzugsweise beträgt dabei das weitere Maß höchstens 110% des zuerst genannten Maßes, insbesondere höchstens 105%. Auf diese Weise lässt sich erzielen, dass der Innenring nicht über die Antriebshülse übersteht und so eine potenzielle Beeinträchtigung eines um das Werkzeug gebildeten Arbeitsbereichs darstellt oder die Sicht auf den Arbeitsbereich behindert.

Vorzugsweise befindet sich der nicht-kreiszylindrische Innenwandbereich vollständig außerhalb der Ebene. So lässt sich erzielen, dass sich der nicht-kreiszylindrische Innenwandbereich, durch den die Übertragung des Drehmoments erfolgt, besonders nahe an einem Arbeitsbereich des Werkzeugs befindet. Das ist vorteilhaft mit Bezug auf die Kraftübertragung.

Vorzugsweise befindet sich der nicht-kreiszylindrische Innenwandbereich vollständig außerhalb des Gehäuses des Kopfbereichs. Dies ist vorteilhaft, weil sich so besonders gute Sichtverhältnisse auf den Arbeitsbereich erzielen lassen und die Zugänglichkeit verbessert wird.

Vorzugsweise sind der Innenring und der Endbereich der Antriebshülse über einen Presssitz miteinander verbunden. Weiterhin vorzugsweise sind der Innenring und der Endbereich der Antriebshülse über eine Schweißverbindung miteinander verbunden. Dies ist herstellungstechnisch vorteilhaft.

Besonders gute Sichtverhältnisse auf den Arbeitsbereich lassen sich erzielen, wenn sich der freie Endbereich der Antriebshülse so weit über das Gehäuse des Kopfbereichs hinaus erstreckt, dass - in einem Schnitt durch die Drehachse betrachtet - eine Tangente, die sowohl das Gehäuse tangiert, als auch den freien Endbereich mit der Drehachse einen Winkel einschließt, der kleiner als 70° ist, vorzugsweise kleiner als 60°.

Vorzugsweise weist der Kopfbereich ein weiteres Drehlager zur Lagerung der Antriebshülse auf, das mit Bezug auf die Ebene dem Endbereich gegenüberliegend angeordnet ist. Dies ist vorteilhaft mit Bezug auf eine sichere und geeignete Lagerung der Antriebshülse im Kopfbereich.

Besonders eignet sich das Chirurgiehandstück, wenn es sich um ein Implantologie-Handstück handelt.

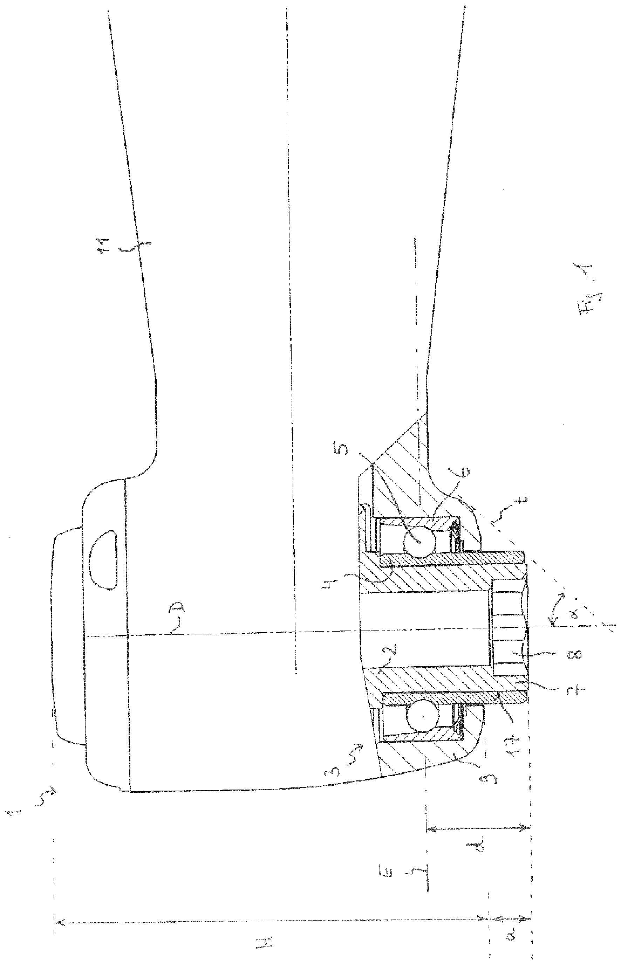

Die Erfindung wird im Folgenden anhand eines Ausführungsbeispiels und mit Bezug auf die Zeichnung näher erläutert. Figur 1 zeigt eine Teil-Längsschnitt-Skizze eines Kopfbereichs 1 eines anmeldungsgemäßen dentalen Chirurgiehandstücks. Das Chirurgiehandstück ist zur Übertragung hoher Drehmomente auf ein (in der Figur nicht gezeigtes) Werkzeug ausgestaltet. Insbesondere kann es sich bei dem Chirurgiehandstück um ein Implantologie-Handstück handeln. Beispielsweise kann das Chirurgiehandstück dazu ausgelegt sein, Drehmomente von 80 Ncm auf das Werkzeug zu übertragen.

Das Chirurgiehandstück weist eine Griffhülse 11 mit einer darin drehbar gelagerten Antriebswelle auf. Weiter weist das Chirurgiehandstück einen Kopfbereich 1 am vorderen Ende der Griffhülse 11 auf. In dem Kopfbereich 1 ist eine Antriebshülse 2 zur Aufnahme des Werkzeugs über ein Kugellager 3 um eine Drehachse D drehbar gelagert angeordnet. Insbesondere kann die Antriebshülse 2 so gestaltet sein, dass das Werkzeug in der Antriebshülse 2 eingespannt werden kann.

Weiterhin umfasst das Chirurgiehandstück eine Getriebeanordnung zur Übertragung eines Drehmoments von der in der Griffhülse 11 angeordneten Antriebswelle auf die im Kopfbereich 1 angeordnete Antriebshülse 2.

Das Kugellager 3 weist einen Innenring 4, Wälzkörper 5 und einen Außenring 6 auf, wobei die Wälzkörper 5 in einer, normal zur Drehachse D orientierten Ebene E angeordnet sind.

Die Antriebshülse 2 weist einen, sich über die Ebene E hinaus erstreckenden Endbereich 7 mit einem nicht-kreiszylindrischen Innenwandbereich 8 zur Übertragung des Drehmoments auf das Werkzeug auf. Beispielsweise ist der Innenwandbereich 8 hierzu polygonal, insbesondere hexagonal strukturiert. Dabei erstreckt sich dieser Endbereich 7 über ein Gehäuse 9 des Kopfbereichs 1 hinaus.

Der Innenring 4 des Kugellagers 3 erstreckt sich um eine Mantelfläche 17 des Endbereichs 7 der Antriebshülse 2 herum und bildet dabei eine Verstärkung des Endbereichs 7 der Antriebshülse 2.

Der Endbereich 7 der Antriebshülse 2 ist bei der Drehmomentübertragung ein hochbelasteter Bereich. Durch den "verlängerten" Innenring 2 lässt sich eine Verstärkung bzw. Armierung dieses Bereichs erzielen, so dass der Endbereich 7 einer besonders hohen Drehmomentübertragung bzw. -belastung ohne Beschädigung standhalten kann. Es lässt sich eine besonders sichere Übertragung von hohen Drehmomenten auf das Werkzeug erzielen und außerdem eine Reduzierung des Risikos eines Ausbrechens oder einer anderweitigen Beschädigung von Teilen des in der Antriebshülse 2 eingespannten Werkzeugs, die sich außerhalb der Antriebshülse 2 befinden.

Vorzugsweise ist der Innenring 4 des Kugellagers 3 aus einem Stück bestehend beziehungsweise einteilig gestaltet. Durch eine solche einteilige Ausführung kann auf ein entsprechendes zusätzliches Bauteil zur Verstärkung verzichtet werden. Dies ist herstellungstechnisch vorteilhaft. Außerdem ist diese Gestaltung vorteilhaft mit Bezug auf einen Montageaufwand im Fall einer Reparatur.

Auch ist es auf diese Weise nicht erforderlich, dass das Gehäuse 9 als solches zur Erzielung der beschriebenen Verstärkung des Endbereichs 7 besonders groß gestaltet werden muss.

Der Innenring 4 hat also zwei Funktionen: Zum einen fungiert er als Innenring 4 des Kugellagers 3, er dient also zur Übertragung einer reibungsarmen rotatorischen Bewegung, zum anderen fungiert er als Armierung des Endbereichs 7 der Antriebshülse 2.

Vorzugsweise befindet sich der nicht-kreiszylindrische Innenwandbereich 8 vollständig außerhalb der Ebene E. Auf diese Weise lässt sich erzielen, dass sich dieser Innenwandbereich 8, der zur Drehmomentübertragung dient, gegenüber der Ebene E sozusagen vorgelagert befindet und so für einen Nutzer des Chirurgiehandstücks eine besonders gute Sicht auf einen Arbeitsbereich ermöglicht ist.

Weiterhin vorzugsweise befindet sich hierzu der nicht-kreiszylindrische Innenwandbereich 8 vollständig außerhalb des Gehäuses 9 des Kopfbereichs 1. Beispielsweise kann die Gestaltung derart sein, dass die Antriebshülse 2 um ein Überstand-Maß a über das Gehäuse 1 übersteht, wobei dieses Überstand-Maß a mindestens 5%, vorzugsweise mindestens 8% der - entlang der Drehachse D gemessenen - Höhe H des Gehäuses 1 beträgt. Beispielsweise kann das Überstand-Maß a zwischen 8% und 15% der Höhe H des Gehäuses 1 betragen.

Eine besonders effektive Armierung bzw. Verstärkung des Endbereichs 7 der Antriebshülse 2 wird erfindungsgemäß dadurch erzielt, dass sich - entlang der Drehachse D betrachtet - der Innenring 4 im Wesentlichen ebenso weit erstreckt wie der Endbereich 7 der Antriebshülse 2. Insbesondere kann hierzu vorgesehen sein, dass sich - entlang der Drehachse D betrachtet - der Endbereich 7 der Antriebshülse 2 um ein Maß d über die Ebene E hinaus erstreckt, wobei sich der Innenring 4 um ein weiteres Maß über die

Ebene E hinaus erstreckt, das mindestens 90% des zuerst genannten Maßes d beträgt, vorzugsweise mindestens 95%. Dabei beträgt weiterhin vorzugsweise das weitere Maß höchstens 110% des zuerst genannten Maßes beträgt, vorzugsweise höchstens 105%.

Vorzugsweise sind der Innenring 4 und der Endbereich 7 der Antriebshülse 2 über einen Presssitz und/oder über eine Schweißverbindung miteinander verbunden.

Besonders gute Sichtverhältnisse auf den Arbeitsbereich lassen sich erzielen, wenn sich der freie Endbereich 7 der Antriebshülse 2 so weit über das Gehäuse 9 des Kopfbereichs 1 hinaus erstreckt, dass - in einem Schnitt durch die Drehachse D betrachtet - eine Tangente t, die sowohl das Gehäuse 9 tangiert, als auch den freien Endbereich 7 mit der Drehachse D einen Winkel α einschließt, der kleiner als 70° ist, vorzugsweise kleiner als 60°.

Für eine besonders geeignete Lagerung der Antriebshülse 2 weist der Kopfbereich 1 vorzugsweise außerdem ein weiteres Drehlager auf, das mit Bezug auf die Ebene E dem Endbereich 7 gegenüberliegend angeordnet ist.

## Patentansprüche

1. Dentales Chirurgiehandstück zur Übertragung hoher Drehmomente auf ein Werkzeug, aufweisend:
- eine Griffhülse (10) mit einer darin drehbar gelagerten Antriebswelle,
- einen Kopfbereich (1) am vorderen Ende der Griffhülse (10),
- eine Antriebshülse (2) zur Aufnahme des Werkzeugs, wobei die Antriebshülse (2) über ein Kugellager (3) um eine Drehachse (D) drehbar in dem Kopfbereich (1) gelagert angeordnet ist,
- eine Getriebeanordnung zur Übertragung eines Drehmoments von der in der Griffhülse (10) angeordneten Antriebswelle auf die in dem Kopfbereich (1) angeordnete Antriebshülse (2),
wobei das Kugellager (3) einen Innenring (4), Wälzkörper (5) und einen Außenring (6) aufweist, wobei die Wälzkörper (5) in einer, normal zur Drehachse (D) orientierten Ebene (E) angeordnet sind,
wobei die Antriebshülse (2) einen, sich über die Ebene (E) hinaus erstreckenden Endbereich (7) mit einem nicht-kreiszylindrischen Innenwandbereich (8) zur Übertragung des Drehmoments auf das Werkzeug aufweist,
**dadurch gekennzeichnet,**
**dass** sich der Endbereich (7) über ein Gehäuse (9) des Kopfbereichs (1) hinaus erstreckt,
und **dass** der Innenring (4) des Kugellagers (3) sich um eine Mantelfläche (17) des Endbereichs (7) der Antriebshülse (2) herum und im Wesentlichen ebenso weit wie der Endbereich (7) der Antriebshülse (2) erstreckt und dabei eine Verstärkung des Endbereichs (7) der Antriebshülse (2) bildet.

2. Dentales Chirurgiehandstück nach Anspruch 1,
**dadurch gekennzeichnet,**
**dass** der Innenring (4) des Kugellagers (3) aus einem Stück bestehend beziehungsweise einteilig gestaltet ist.

3. Dentales Chirurgiehandstück nach einem der vorhergehenden Ansprüche,
**dadurch gekennzeichnet,**
**dass** der Innenwandbereich (8) polygonal, insbesondere hexagonal strukturiert ist.

4. Dentales Chirurgiehandstück nach einem der vorhergehenden Ansprüche,
**dadurch gekennzeichnet,**
**dass** sich - entlang der Drehachse (D) betrachtet - der Endbereich (7) der Antriebshülse (2) um ein Maß d über die Ebene (E) hinaus erstreckt, wobei sich der Innenring (4) um ein weiteres Maß über die Ebene (E) hinaus erstreckt, das mindestens 90% des zuerst genannten Maßes d beträgt, vorzugsweise mindestens 95%.

5. Dentale Chirurgiehandstück nach Anspruch 4,
**dadurch gekennzeichnet,**
**dass** das weitere Maß höchstens 110% des zuerst genannten Maßes beträgt, vorzugsweise höchstens 105%.

6. Dentales Chirurgiehandstück nach einem der vorhergehenden Ansprüche,
**dadurch gekennzeichnet,**
**dass** sich der nicht-kreiszylindrische Innenwandbereich (8) vollständig außerhalb der Ebene (E) befindet.

7. Dentales Chirurgiehandstück nach Anspruch 6,
**dadurch gekennzeichnet,**
**dass** sich der nicht-kreiszylindrische Innenwandbereich (8) vollständig außerhalb des Gehäuses (9) des Kopfbereichs (1) befindet.

8. Dentales Chirurgiehandstück nach einem der vorhergehenden Ansprüche,
**dadurch gekennzeichnet,**
**dass** der Innenring (4) und der Endbereich (7) der Antriebshülse (2) über einen Presssitz miteinander verbunden sind.

9. Dentales Chirurgiehandstück nach einem der vorhergehenden Ansprüche,
**dadurch gekennzeichnet,**
**dass** der Innenring (4) und der Endbereich (7) der Antriebshülse (2) über eine Schweißverbindung miteinander verbunden sind.

10. Dentales Chirurgiehandstück nach einem der vorherigen Ansprüche,
**dadurch gekennzeichnet,**
**dass** sich der freie Endbereich (7) der Antriebshülse (2) so weit über das Gehäuse (9) des Kopfbereichs (1) hinaus erstreckt, dass - in einem Schnitt durch die Drehachse (D) betrachtet - eine Tangente (t), die sowohl das Gehäuse (9) tangiert, als auch den freien Endbereich (7) mit der Drehachse (D) einen Winkel (α) einschließt, der kleiner als 70° ist, vorzugsweise kleiner als 60°.

11. Dentales Chirurgiehandstück nach einem der vorhergehenden Ansprüche,
**dadurch gekennzeichnet,**
**dass** der Kopfbereich (1) ein weiteres Drehlager zur Lagerung der Antriebshülse (2) aufweist, das mit Bezug auf die Ebene (E) dem Endbereich (7) gegenüberliegend angeordnet ist.

12. Dentales Chirurgiehandstück nach einem der vorhergehenden Ansprüche,
**dadurch gekennzeichnet,**
**dass** es sich um ein Implantologie-Handstück handelt.

## Claims

1. Dental surgery handpiece for transmitting high torques to a tool, having:
- a grip sleeve (10) with a drive shaft mounted rotatably therein,
- a head region (1) at the front end of the grip sleeve (10),
- a drive sleeve (2) for receiving the tool, wherein the drive sleeve (2) is mounted in the head region (1) in such a way as to be rotatable about a rotation axis (D) via a ball bearing (3),
- a gear arrangement for transmitting a torque from the drive shaft arranged in the grip sleeve (10) to the drive sleeve (2) arranged in the head region (1),
wherein the ball bearing (3) has an inner ring (4), rolling bodies (5) and an outer ring (6), wherein the rolling bodies (5) are arranged in a plane (E) oriented perpendicularly to the rotation axis (D), wherein the drive sleeve (2) has an end region (7), which extends beyond the plane (E) and which has a non-circular-cylindrical inner wall region (8) for transmitting the torque to the tool,
**characterized in that**
the end region (7) extends beyond a housing (9) of the head region (1),
and **in that** the inner ring (4) of the ball bearing (3) extends about a lateral face (17) of the end region (7) of the drive sleeve (2) and substantially by the same extent as the end region (7) of the drive sleeve (2) and thereby forms a reinforcement of the end region (7) of the drive sleeve (2).

2. Dental surgery handpiece according to Claim 1, **characterized in that** the inner ring (4) of the ball bearing (3) is configured consisting of one piece or in one part.

3. Dental surgery handpiece according to one of the preceding claims, **characterized in that** the inner wall region (8) is structured with a polygonal shape, in particular a hexagonal shape.

4. Dental surgery handpiece according to one of the preceding claims, **characterized in that**, viewed along the rotation axis (D), the end region (7) of the drive sleeve (2) extends beyond the plane (E) by a distance d, wherein the inner ring (4) extends beyond the plane (E) by a further distance which is at least 90% of the first-mentioned distance d, preferably at least 95%.

5. Dental surgery handpiece according to Claim 4, **characterized in that** the further distance is at most 110% of the first-mentioned distance, preferably at most 105%.

6. Dental surgery handpiece according to one of the preceding claims, **characterized in that** the non-circular-cylindrical inner wall region (8) is located completely outside the plane (E).

7. Dental surgery handpiece according to Claim 6, **characterized in that** the non-circular-cylindrical inner wall region (8) is located completely outside the housing (9) of the head region (1).

8. Dental surgery handpiece according to one of the preceding claims, **characterized in that** the inner ring (4) and the end region (7) of the drive sleeve (2) are connected to each other by an interference fit.

9. Dental surgery handpiece according to one of the preceding claims, **characterized in that** the inner ring (4) and the end region (7) of the drive sleeve (2) are connected to each other by a welded connection.

10. Dental surgery handpiece according to one of the preceding claims, **characterized in that** the free end region (7) of the drive sleeve (2) extends so far beyond the housing (9) of the head region (1) that, viewed in a section through the rotation axis (D), a tangent line (t), which is tangent both to the housing (9) and to the free end region (7), encloses with the rotation axis (D) an angle (α) which is smaller than 70°, preferably smaller than 60°.

11. Dental surgery handpiece according to one of the preceding claims, **characterized in that** the head region (1) has a further rotary bearing for mounting the drive sleeve (2), which further rotary bearing is arranged lying opposite the end region (7) with reference to the plane (E).

12. Dental surgery handpiece according to one of the preceding claims, **characterized in that** it is an implantology handpiece.

## Revendications

1. Pièce à main chirurgicale dentaire pour la transmission de couples élevés sur un outil, présentant :
- une douille de poignée (10) avec un arbre d'entraînement monté en rotation dans celle-ci,
- une zone de tête (1) à l'extrémité avant de la douille de poignée (10),
- une douille d'entraînement (2) pour recevoir l'outil, dans laquelle la douille d'entraînement (2) est disposée de manière montée dans la zone de tête (1) de façon à pouvoir tourner autour d'un axe de rotation (D) par l'intermédiaire d'un roulement à billes (3),
- un ensemble de transmission pour transmettre un couple de l'arbre d'entraînement disposé dans la douille de poignée (10) sur la douille d'entraînement (2) disposée dans la zone de tête (1),
dans laquelle le roulement à billes (3) présente une bague intérieure (4), des corps de roulement (5) et une bague extérieure (6), dans laquelle les corps de roulement (5) sont disposés dans un plan (E) orienté perpendiculairement à l'axe de rotation (D),
dans laquelle la douille d'entraînement (2) présente une zone d'extrémité (7) s'étendant au-delà du plan (E) avec une zone de paroi intérieure (8) non cylindrique circulaire pour transmettre le couple sur l'outil,
**caractérisée en ce**
**que** la zone d'extrémité (7) s'étend au-delà d'un boîtier (9) de la zone de tête (1),
et **que** la bague intérieure (4) du roulement à billes (3) s'étend autour d'une surface d'enveloppe (17) de la zone d'extrémité (7) de la douille d'entraînement (2) et sensiblement tout aussi loin que la zone d'extrémité (7) de la douille d'entraînement (2) et ce faisant forme un renforcement de la zone d'extrémité (7) de la douille d'entraînement (2).

2. Pièce à main chirurgicale dentaire selon la revendication 1, **caractérisée en ce**
**que** la bague intérieure (4) du roulement à billes (3) est conçue d'un seul tenant ou d'une seule pièce.

3. Pièce à main chirurgicale dentaire selon l'une quelconque des revendications précédentes,
**caractérisée en ce**
**que** la zone de paroi intérieure (8) est structurée de manière polygonale, en particulier hexagonale.

4. Pièce à main chirurgicale dentaire selon l'une quelconque des revendications précédentes,
**caractérisée en ce**
**que** - observée le long de l'axe de rotation (D) - la zone d'extrémité (7) de la douille d'entraînement (2) s'étend d'une mesure d au-delà du plan (E), dans laquelle la bague intérieure (4) s'étend d'une autre mesure au-delà du plan (E), qui atteint au moins 90 % de la mesure d citée tout d'abord, de préférence au moins 95 %.

5. Pièce à main chirurgicale dentaire selon la revendication 4, **caractérisée en ce**
**que** l'autre mesure atteint au maximum 110 % de la mesure citée tout d'abord, de préférence au maximum 105 %.

6. Pièce à main chirurgicale dentaire selon l'une quelconque des revendications précédentes,
**caractérisée en ce**
**que** la zone de paroi intérieure (8) non cylindrique circulaire se trouve entièrement à l'extérieur du plan (E).

7. Pièce à main chirurgicale dentaire selon la revendication 6,
**caractérisée en ce**
**que** la zone de paroi intérieure (8) non cylindrique circulaire se trouve entièrement à l'extérieur du boîtier (9) de la zone de tête (1).

8. Pièce à main chirurgicale dentaire selon l'une quelconque des revendications précédentes,
**caractérisée en ce**
**que** la bague intérieure (4) et la zone d'extrémité (7) de la douille d'entraînement (2) sont reliées l'une à l'autre par l'intermédiaire d'un ajustement serré.

9. Pièce à main chirurgicale dentaire selon l'une quelconque des revendications précédentes,
**caractérisée en ce**
**que** la bague intérieure (4) et la zone d'extrémité (7) de la douille d'entraînement (2) sont reliées l'une à l'autre par l'intermédiaire d'une liaison soudée.

10. Pièce à main chirurgicale dentaire selon l'une quelconque des revendications précédentes,
**caractérisée en ce**
**que** la zone d'extrémité (7) libre de la douille d'entraînement (2) s'étend au-delà du boîtier (9) de la zone de tête (1) si loin que - vue dans une coupe à travers l'axe de rotation (D) - une tangente (t), qui est tangente aussi bien au boîtier (9) qu'à la zone d'extrémité (7) libre, forme avec l'axe de rotation (D) un angle (a) qui est inférieur à 70°, de préférence inférieur à 60°.

11. Pièce à main chirurgicale dentaire selon l'une quelconque des revendications précédentes,
**caractérisée en ce**
**que** la zone de tête (1) présente un autre palier rotatif pour le montage de la douille d'entraînement (2), qui est disposé de manière opposée à la zone d'extrémité (7) par rapport au plan (E).

12. Pièce à main chirurgicale dentaire selon l'une quelconque des revendications précédentes,
**caractérisée en ce**
**qu'**il s'agit d'une pièce à main d'implantologie.
